# EUROPEAN PATENT APPLICATION

(11) **EP 1 193 148 A2**
(43) Date of publication of application: **03.04.2002**
(21) Application number: 01307741.7
(22) Date of filing: 11.09.2001
(51) Int. Cl.: B60T 7/04, G05G 1/14

(54) **Vehicle foot pedal**

(30) Priority: 23.03.2001 GB 0107344; 12.09.2000 GB 0022304
(71) Applicant: BCK Technology Limited, Scunthorpe, North Lincolnshire DN15 1ZZ (GB)
(72) Inventor: Sherringham, Martin Paul, BCK Technology Limited, Scunthorpe DN15 1ZZ (GB)
(74) Representative: Long, Edward Anthony

(57) **Abstract**

A system for sensing the position of a vehicle foot pedal (1), comprises a non-contact sensor (8) associated with a displaceable element (2, 7) of the pedal (1).

Another aspect of the invention is directed to a control system for a motor vehicle, having a driver operable clutch pedal (1), characterised in that a non-contact sensor (8) is associated with an actuating element (2, 7) of the clutch pedal (1), with an electronic control circuit receiving positional information from the sensor (8) in order to effect automatic release of the vehicle's parking brake upon a predetermined position of the clutch pedal (1) being attained.

The invention also includes a motor vehicle provided with the sensing system and/or the control system.

## Description

### Field of the Invention

This invention relates to a vehicle foot pedal position sensing system, typically of a motor car, incorporating a driver actuable pedal, such as a clutch pedal, brake or accelerator pedal.

### Background of the Invention

Traditionally, in a car with a manual transmission, clutch and parking brake are operated by the driver, particularly on a hill start, to balance the force required by the parking brake with that of the transmission. This is performed by feel.

Considering for instance a clutch pedal, an application exists where the technologies employed in the system incorporate traditional hydraulic clutch system in conjunction with sensing the clutch position, with an interface to the parking brake such that said system can automatically and progressively release the parking brake as the biting point of the clutch is reached and exceeded. The parking brake could of course be a "handbrake" traditionally located between the driver and passenger seats, or a foot operated brake, traditionally located at the left hand side of the driver's footwell.

For the above mentioned clutch pedal application, it is necessary for the system to be able to accurately measure the position of the clutch pedal. Prior art sensing methods use electrical contact technologies, such as potentiometers, to determine the position of the clutch pedal. The disadvantage of such methods is the associated inaccuracy caused by mechanical tolerance build-up between machined and fabricated parts outside the main actuating control element.

### Object of the Present Invention

A basic object of the present invention is the provision of an improved vehicle foot pedal position sensing system.

### Summary of a First Aspect of the Invention

According to a first aspect of the invention, there is provided a system for sensing the position of a vehicle foot pedal, comprising a non-contact sensor associated with a displaceable element of the pedal.

### Summary of a Second Aspect of the Invention

According to a second aspect of the invention, there is provided a control system for a motor vehicle, having a driver operable clutch pedal, wherein a non-contact sensor is associated with an actuating element of the clutch pedal, with an electronic control circuit receiving positional information from the sensor in order to effect automatic release of the vehicle's parking brake upon a predetermined position of the clutch pedal being attained.

### Summary of a Third Aspect of the Invention

According to a third aspect of the invention, there is provided, there is provided a motor vehicle incorporating a system in accordance with the first aspect, or a control system in accordance with the second aspect.

### Advantage(s) of the Invention

When considering the foot pedal as a clutch pedal, the sensing system in accordance with the first aspect and control system in accordance with the second aspect eliminates the need - when the vehicle is about to move off from rest, particularly in a "hill-start" situation - for the skill of the driver to co-ordinate clutch bite and parking brake release, as parking break release is automatically effected.

This provides the possibility of automatic application of the parking brake eg by the driver pressing a button (to activate an electrical/electronic/hydraulic/mechanical means) and automatic release of the parking brake by the sensing system and control system of the first and second aspects.

The employment of a non-contact sensor advantageously eliminates the wear characteristics associated with potentiometer or similar prior art systems. By measuring the actual position of a main control element eg the associated master cylinder, play and tolerances in the linkage to this element are eliminated. Whilst the use of the pedal positioning sensor system for the brake and accelerator pedals provides the possibility of a "drive by wire" system for a road vehicle.

### Preferred Features of the Invention

The pedal is a clutch pedal.

The pedal is a brake pedal.

The pedal is an accelerator pedal.

The non-contact sensor is a linear variable differential transformer (LVDT).

The non-contact sensor is a Hall effect sensor.

The non-contact sensor is an inductive distance sensor.

The displaceable element of the pedal is a linearly displaceable element.

The displaceable element is the main actuating control element of the pedal.

The main actuating control element is the clutch master cylinder, thereby permitting measurement of the position of the (eg clutch) pedal direct in line with the master cylinder.

In the LVDT embodiment, an electronic control circuit provides a suitable electrical waveform to drive the LVDT.

The output signal from the LVDT (phase and/or amplitude) is then conditioned by amplification and/or buffering circuitry.

The output of this buffering circuitry is then either output as an analogue voltage representing the position of the foot-pedal or is further conditioned and output digitally.

This analogue voltage, or digital output signal is then used to control actuators to provide relevant real-time control.

The analogue voltage, or digital output signal is also used to provide instrumentation information to the driver of the car (for example as a warning tone or visual display).

The control circuitry is internal or external to the position sensing circuitry.

The various aspects of the invention thus provide:
1. electrically contact free monitoring of foot-pedal position;
2. foot-pedal position measured from the stroke of master cylinder;
3. foot-pedal angular displacement calculated from linear displacement; and
4. automatic control of the parking brake as a function of the clutch actuating control element position.

The invention will now be described in greater detail, by way of example, with reference to the accompanying diagrammatic drawing.

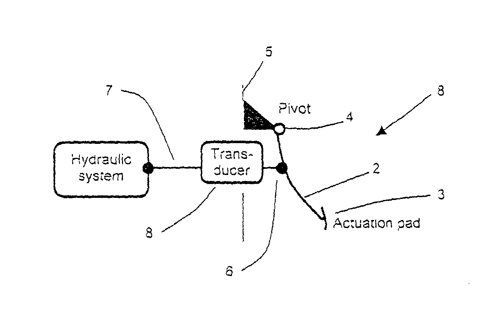

In the drawing is illustrated a vehicle foot pedal 1, typically a clutch pedal. The pedal 1 comprises a blade 2 carrying at one end a foot pad 3, with its other end mounted on a pivot 4 located in a motor vehicle pedal box secured in the conventional manner to support structure 5 such as the vehicle dash or crossbeam, whereby the pedal 1 is pivotable under the control of the driver.

The blade 2 is pivotally attached at 6 to a push rod 7 operable on a hydraulic, operating system 8 for the vehicles clutch.

Associated with the push rod 7 is, in accordance with the invention, a non-contact sensor 8 such as an LVDT or an inductive distance sensor capable of sensing the position of the push rod 7 and hence the clutch pedal 1.

By the use of industry-standard electronic components, a suitable waveform is generated to drive the eg LVDT sensor 8, and the output from the sensor 8, reflecting the position at any given point in time of the push rod 7 and hence the pedal 1, is processed by standard electronic means to provide whatever outputs are required, such as automatic release of the parking brake when the clutch pedal position signals that the driver wishes to move off.

## Claims

1. A system for sensing the position of a vehicle foot pedal, **characterised in that** a non-contact sensor (8) associated with a displaceable element (2, 7) of the pedal (1).

2. A system as claimed in Claim 1, **characterised in that** the pedal (1) is a clutch pedal, brake pedal or accelerator pedal.

3. A system as claimed in Claim 1 or Claim 2, **characterised in that** the non-contact sensor (8) is a linear variable differential sensor (LVDT), a Hall effect sensor, or an inductive distance sensor.

4. A system as claimed in any one of Claims 1-3, **characterised in that** the displaceable element of the pedal is a linearly displaceable element (7).

5. A system as claimed in Claim 4, **characterised in that** the displaceable element is the main actuating control element of the pedal (1).

6. A system as claimed in Claim 5, **characterised in that** the main actuating control element is the clutch master cylinder, thereby permitting measurement of the position of the (eg clutch) pedal direct in line with the master cylinder.

7. A system as claimed in Claim 3 and any claim appended thereto, in the LVDT embodiment, **characterised in that**:
(i) an electronic control circuit provides a suitable electrical waveform to drive the LVDT;
(ii) the output signal from the LVDT (phase and/or amplitude) is then conditioned by amplification and/or buffering circuitry;
(iii) the output of this buffering circuitry is then either output as an analogue voltage representing the position of the foot-pedal or is further conditioned and output digitally; and
(iv) this analogue voltage, or digital output signal is then used to control actuators to provide relevant real-time control.

8. A system as claimed in Claim 7, **characterised in that** the analogue voltage, or digital output signal is also used to provide instrumentation information to the driver of the car (for example as a warning tone or visual display).

9. A control system for a motor vehicle, having a driver operable clutch pedal, **characterised in that** a non-contact sensor (8) is associated with an actuating element (2, 7) of the clutch pedal (1), with an electronic control circuit receiving positional information from the sensor (8) in order to effect automatic release of the vehicle's parking brake upon a predetermined position of the clutch pedal (1) being attained.

10. A control system as claimed in Claim 9, **characterised in that** the non-contact sensor (8) is a linear variable differential sensor (LVDT), a Hall effect sensor, or an inductive distance sensor.

11. A control system as claimed in Claim 10, in the LVDT embodiment, **characterised in that**:
(i) an electronic control circuit provides a suitable electrical waveform to drive the LVDT;
(ii) the output signal from the LVDT (phase and/or amplitude) is then conditioned by amplification and/or buffering circuitry;
(iii) the output of this buffering circuitry is then either output as an analogue voltage representing the position of the foot-pedal or is further conditioned and output digitally; and
(iv) this analogue voltage, or digital output signal is then used to control actuators to provide relevant real-time control.

12. A control system as claimed in Claim 11, **characterised in that** the analogue voltage, or digital output signal is also used to provide instrumentation information to the driver of the car (for example as a warning tone or visual display).

13. A motor vehicle provided with a system as defined in any one of Claims 1-8.

14. A motor vehicle provided with a system as defined in any one of Claims 9-12.
